# EUROPÄISCHE PATENTANMELDUNG

(11) **EP 2 033 849 A1**
(43) Veröffentlichungstag der Anmeldung: **11.03.2009**
(21) Anmeldenummer: 07016987.5
(22) Anmeldetag: 30.08.2007
(51) Int. Cl.: B60R 16/04

(54) **Kunststoffformteil zur Aufnahme einer Fahrzeugbatterie**

(71) Anmelder: PEGUFORM GMBH, 79268 Bötzingen (DE)
(72) Erfinder: Rinderlin, Jürgen, 79279 Vörstetten (DE); Hoecker, Frank, 89160 Dornstadt (DE); Uhl, Ulrich, 73432 Aalen (DE)
(74) Vertreter: Neunert, Peter Andreas

(57) **Zusammenfassung**

Kunststoffformteil zur Aufnahme mindestens einer Fahrzeugbatterie, das durch eines oder mehrerer Einlegeteile verstärkt ist und mindestens eine weitere funktionelle Einrichtung aufweist, die den Kunststoffformteil unmittelbar während des Formgebungsprozesses angeformt ist.

## Beschreibung

Die vorliegende Erfindung betrifft ein Kunststoffformteil zur Aufnahme mindestens einer Fahrzeugbatterie mit den Merkmalen des Oberbegriffs des Anspruchs 1.

Zur Aufnahme einer Fahrzeugbatterie werden im Kraftfahrzeugbau unterschiedliche Tragwannen eingesetzt. Insbesondere Tragwannen für Batterien für Lastkraftwagen unterliegen einer besonders hohen Beanspruchung, da sie üblicherweise ungeschützt am Tragrahmen in der Nähe der Fahrzeugräder angeordnet sind. So sind derartige Tragwannen zumeist Spritzwasser, Schmutz und Steinschlag sowie mechanischen Belastungen, wie zum Beispiel den Schwingungen des Tragrahmens, ausgesetzt. Da derartige Tragwannen auch darüber hinaus eine Schutzfunktion für die Fahrzeugbatterie selber ausüben sollen, sind bis heute Batteriewannen für Lastkraftwagen in der Regel als Stahlblechkonstruktionen ausgeführt, um den außerordentlichen Belastungen gewachsen zu sein. Ein Nachteil bei derartigen Konstruktionen ist das äußerst hohe Eigengewicht einer derartigen Batteriewanne.

Es sind auch Batterietragwannen bekannt, die aus Kunststoff in einem relativ einfachen Fertigungsverfahren hergestellt werden. Eine derartige Tragwanne wird bspw. in der DE 199 61 853 C1 beschrieben, die eine Wanne aus faserverstärktem Kunststoff zum Gegenstand hat. Insbesondere als Aufnahmebehälter für LKW-Batterien sind derartige Wannen, die in ihrer Gesamtheit aus thermoplastischem Kunststoff bestehen, nur bedingt geeignet. So werden an die mechanischen Eigenschaften für eine Tragwanne zur Aufnahme einer Fahrzeugbatterie für Lastkraftwagen Anforderungen gestellt, die allein mit einem faserverstärkten Kunststoff nicht erreicht werden können.

In der 10 2005 054 764 B3 werden Tragwannen zur Aufnahme einer Fahrzeugbatterie für Lastkraftwagen beschrieben, deren mechanische Eigenschaften durch das Einarbeiten von Einlegeteilen aus vorgefertigten Fasergerüsten verbessert werden.

Da die Batteriewannen in der Regel direkt mit der Fahrzeugstruktur des Lastkraftwagens verbunden sind, werden hohe Schwingungen und Vibrationen von der Fahrzeugstruktur in die Batteriewanne eingeleitet. Dies hat zur Folge, dass insbesondere an den Krafteinleitungspunkten bzw. an den Stellen zur Befestigung an der Fahrzeugstruktur die mechanische Belastung für die Tragwanne enorm ist und zusätzliche Verstärkungen erforderlich sind. Mit dieser Maßnahme sollen die Wirkkräfte aufgefangen werden und flächig in das Formteil eingeleitet werden, um ein Ausreißen der Kunststoffstruktur zu vermeiden. Mit Hilfe von Einlegeteilen ist es also möglich, die Stabilität des Formteils bzw. der Batteriewanne so weit zu erhöhen, dass die ursprüngliche Blechwanne durch eine deutlich leichtere Kunststoffwanne ersetzt werden kann.

Die bekannten Kunststoffwannen haben jedoch den Nachteil, dass zusätzliche funktionelle Einrichtungen, die ursprünglich an der Blechwanne angeschraubt oder angeschweißt waren, nun fehlen.

Der vorliegenden Erfindung liegt somit die Aufgabe zu Grunde, Kunststoffformteile zur Aufnahme mindestens einer Fahrzeugbatterie eines Kraftfahrzeugs, insbesondere eines Lastkraftwagens, zur Verfügung zu stellen, die die Nachteile des Standes der Technik nicht aufweisen.

Gelöst wird diese Aufgabe durch ein Kunststoffformteil mit den Merkmalen des Anspruchs 1. Vorteilhafte Ausführungsformen der vorliegenden Erfindung sind Gegenstand der Unteransprüche.

Das erfindungsgemäße Kunststoffformteil wird über ein konventionelles Formgebungsverfahren, wie zum Beispiel Spritzgießen, Verpressen, Extrusion oder Strangablegeverfahren, hergestellt, wobei als Kunststoffkomponente für die Matrix Kunststoffmaterialien, ausgewählt aus der Gruppe faserverstärktes Polypropylen (PP), faserverstärktes Polyethylen (PE), faserverstärktes Polyamid (PA), "sheet moulding compounds" (SMC) sowie Glasfasermattenthermoplaste (GMT) auf der Basis von Polypropylen, Polyethylen oder Polyamid, in Frage kommen. Als Faserverstärkung der Kunststoffmatrix können Glasfasern, Karbonfasern, Metallfasern, Nylon oder auch textile Naturfasern eingesetzt werden, wobei die Fasern unidirektional, gewoben oder wirr einsetzbar sind.

Die nötige Stabilität, um beispielsweise als Batteriewanne für LKWs eingesetzt zu werden, erhalten die Kunststoffformteile durch die Einlagerungen von mindestens einem, vorzugsweise mehreren Einlegeteilen (Hybride). Als Einlegeteile bzw. Hybride werden dazu Gewebematten oder Bleche eingesetzt, die bei der Formgebung mit der Kunststoffmatrix umpresst oder umspritzt werden. Bevorzugt werden die Einlegeteile lokal in den besonders beanspruchten Bereichen des Formteils, wie beispielsweise an den Ecken oder Kanten, aber auch im Bereich der größeren Flächen eingesetzt, wobei die Einlegeteile außenseitig, bauteilmittig oder innenliegend angeordnet sein können. Eine vorteilhafte Ausgestaltung sieht vor, dass im Einlegeteil das Kunststoffformteil selber vorgebildet ist, so dass sich die Verstärkung nach dem Einarbeiten des Einlegeteils bei der Formgebung über das gesamte Kunststoffformteil erstreckt. Auf diese Weise gelingt es, Formteile mit einer außerordentlich hohen mechanischen Stabilität zu erhalten, die trotz ihrer extremen Stabilität ein im Vergleich zu den konventionellen Stahl- oder Blechkonstruktionen deutlich geringeres Gewicht aufweisen. So liegen die Gewichte von konventionellen Batteriewannen, die aus vielen einzelnen Blechteilen zu einem Bauteil zusammengebaut werden müssen, bei ca. 45 kg, während ein oben beschriebenes Hybridverstärkte Kunststoffformteil mit den gleichen Funktionen nur ca. 12 kg wiegt.

Eine wichtige Rolle als Einlagerungen spielen dabei auch Befestigungsvorrichtungen zur Befestigung der Batteriewanne am Fahrzeug, die in Form von Gewindeeinsätzen und Blechverstärkungen dem Kunststoffformteil direkt angeformt sind und in der Lage sind, hohe Belastungen aufzunehmen, eine harte Verschraubung erlauben, wobei vorzugsweise Metall direkt auf Metall trifft, und eine optimale Krafteinleitung in die Seitenwände gewährleisten.

Erfindungswesentlich ist nun, dass das Kunststoffformteil neben seiner Funktion als Aufnahmebehälter für die Kraftfahrzeugbatterie mindestens eine weitere, vorzugsweise jedoch mehrere weitere, funktionelle Einrichtung(en) aufweist, die dem Kunststoffformteil unmittelbar während des Formgebungsprozesses angeformt werden. Dabei kann die weitere funktionelle Einrichtung entweder der Matrix des Formteils direkt angeformt sein oder sie wird dem Formteil bspw. über die oben beschriebenen Hybride als Einlegeteile angeformt, wozu selbstverständlich auch die Einlegeteile, die als Verstärkung in der Matrix eingelagert sind, geeignet bzw. prädestiniert sind.

Als funktionelle Einrichtung kommen sämtliche Funktionen in Betracht, die im Bereich der Batteriewanne anfallen, wie z.B. Anlageflächen und oder Montagehilfen für Tankbehälter, Halterungen für Kabel, Festigungsvorrichtungen für Deckel, Ventile, Verteiler oder Tanks, Bodenöffnungen für Schmutzwasser, Anti-Rutsch-Vorrichtungen oder auch Positionierungshilfen für die Batterien.

Bei weiteren vorteilhaften Ausführungsformen ist die Batteriewanne mit Anti-Rutsch-Matten oder Anti-Rutsch-Vorrichtungen ausgerüstet, die dabei bspw. mit dem Kunststoffmaterial des Kunststoffformteils umpresst oder umspritzt sind.

Bevorzugte Ausgestaltungen der vorliegenden Erfindung sehen vor, dass Gewebematten oder Glasfaserstränge als lokale Verstärkungen allein oder in Kombination mit Blechverstärkungen eingesetzt sind. Als Einlegeteile kommen insbesondere Metallbleche, Faserhalbzeuge, Gewebelagen oder Vlieslagen in Frage.

Weitere vorteilhafte Ausgestaltungen der vorliegenden Erfindung sehen Einlegeteile vor, die die Grundform des herzustellenden Kunststoffformteils besitzen und dabei Einrichtungen für zusätzliche Funktionen aufweisen. Wie bereits oben erwähnt, erhält man auf diese Weise Kunststoffformteile mit einer außerordentlich hohen mechanischen Festigkeit, die darüber hinaus weitere funktionelle Einrichtungen aufweisen.

Im Folgenden wird die vorliegende Erfindung anhand von einigen ausgesuchten Ausführungsbeispielen, die in den Figuren 1 bis 5 wiedergegeben sind, im Detail erläutert.

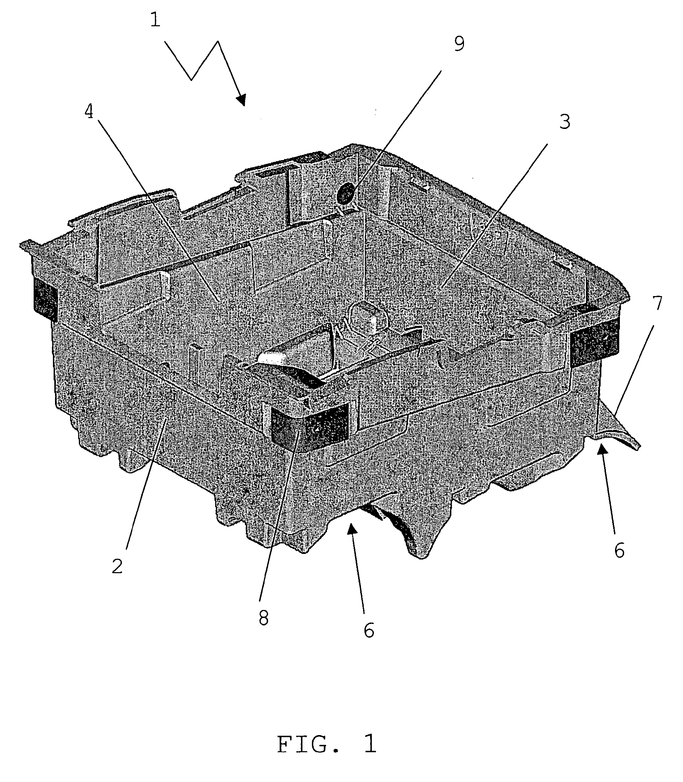

Dabei zeigt Figur 1 eine perspektivische Darstellung einer Batteriewanne mit Sicht von oben;
Figur 2 eine perspektivische Darstellung einer Batteriewanne mit Sicht von unten;
Figur 3 eine perspektivische Darstellung einer Batteriewanne mit bodenseitig angelagerten Behältern;
Figur 4 die Wanne aus Figur 3 in der Draufsicht;
Figur 5 eine Batteriewanne in der Draufsicht und
Figur 5a einen Ausschnitt aus der Figur 5.

Die Figur 1 zeigt eine hybridverstärkte Batteriewanne 1 mit einer vorderen Stirnwand 2, einer hinteren Stirnwand 3 sowie zwei Seitenwände 4. In den Boden 5, der bei der vorliegenden Darstellung verdeckt ist, sind Aufnahmeflächen 6 für Behälter 13 integriert, wobei die Aufnahmeflächen 6 der Batteriewanne 1 direkt angeformt sind. Um die Aufnahmekapazität des Bodenbereichs der Batteriewanne 1 zu erweitern ist der Wanne 1 quasi als Verlängerung der hinteren Stirnwand 3 ein Spoiler 7 angeformt, der ebenfalls als Aufnahmefläche für Behälter 13 vorgesehen ist. Die Ecken der Batteriewanne 1 sind außenseitig mit eingelegten Blechen 8 verstärkt, die im Formgebungsprozess (Spritzgießen) direkt eingeformt oder nachträglich montiert werden. Auf der Innenseite ist auf Höhe der Blechverstärkung 8 eine Lochverstärkung 9 zu erkennen, die ebenfalls vorteilhaft im Formgebungsprozess direkt eingeformt ist. Die Verstärkungen 8 und 9 ermöglichen eine harte Verschraubung der Batteriewanne 1 am Fahrzeug und sind dafür ausgelegt, extrem hohe Belastungen aufzunehmen. Die Verstärkungen 8 und 9 sind als zusätzliche lokale Verstärkungen zu den Verstärkungen durch Einlegeteile in der Wanne selber vorgesehen. Als Einlegeteile, die bei der vorliegenden Darstellung nicht zu erkennen sind, kommen insbesondere Gewebematten oder Bleche in Frage, die beim Formgebungsprozess umformt bzw. umpresst oder umspritzt werden. Einlegeteile oder Hybride können sämtliche Bereiche der Batteriewanne 1 partiell verstärken. Eine vorteilhafte Ausführungsform sieht vor, dass der gesamte Basiskörper der Batteriewanne 1 gewebe- oder blechverstärkt ist.

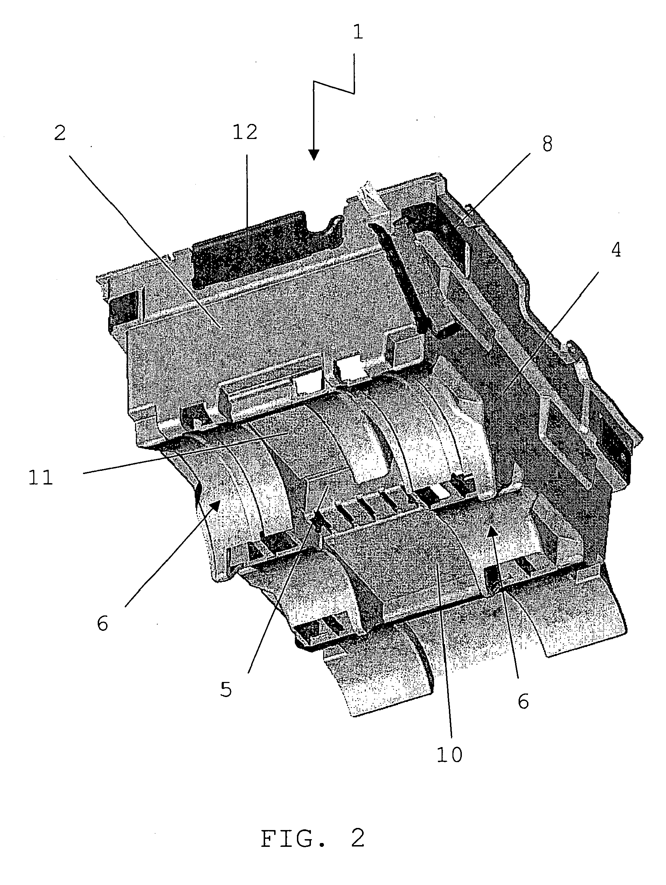

Die Figur 2 zeigt eine perspektivische Darstellung der Batteriewanne 1 in der Ansicht von unten. Bei dieser Darstellung sind insbesondere die Auflageflächen 6 für Behälter 13, die im Wannenboden 5 integriert sind, sehr gut zu erkennen. Im Bodenbereich 10 der Batteriewanne 1 sind ebenfalls die Rückseiten der Anlageflächen 10 und 11 für die Batterien zu sehen. Im Eckbereich ist wiederum eine Blechverstärkung 8 zu erkennen, die beim Formgebungsprozess direkt eingeformt oder nachträglich montiert ist.

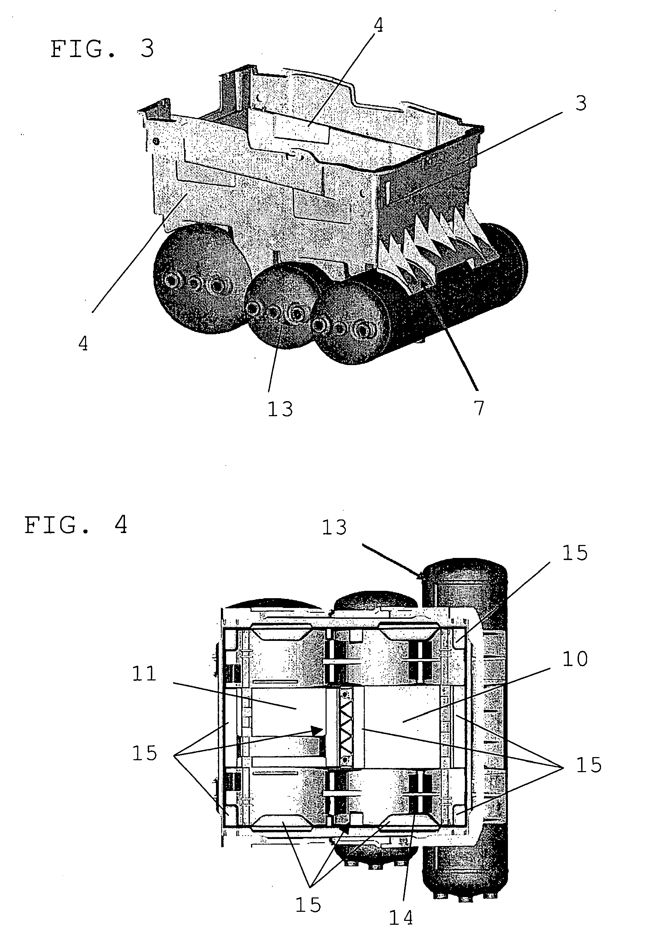

Die Figur 3 zeigt in einer perspektivischen Darstellung die Batteriewanne 1 mit Behältern 13, die über die Aufnahmeflächen 6 der Batteriewanne 1 angelagert sind. Der Spoiler 7 im Bereich der hinteren Stirnwand 3 der Batteriewanne 1 erweitert die Anlagefläche 6 für die Behälter 13 über die Batteriewanne 1 hinaus. Verstärkt wird der Spoiler 7 durch zusätzliche Verstärkungsrippen, die zwischen Spoiler 7 und der hinteren Stirnwand 3 angeordnet sind.

Die Figur 4 zeigt die Batteriewanne 1 aus Figur 3 mit angelagerten Behältern 13 in der Draufsicht. Die Anlageflächen 10, 11 und 15 für die Batterien sind unterschiedlich groß ausgeführt und der jeweils aufzunehmenden Batterie angepasst. In der Figur 4 sind eine Vielzahl von Auflageflächen 10, 11, 15 für Batterien zu erkennen, die so positioniert sind und deren Formgebung so gewählt ist, dass eine oder mehrere verschiedene Batterien mit unterschiedlichen Größen in der Batteriewanne 1 positioniert werden können, ohne dass der Einsatz von Zusatzwerkzeug erforderlich wird. Aus dieser Perspektive wird auch ersichtlich, dass zwischen den Aufnahmeflächen 6 für die Behälter 13 im Bodenbereich der Batteriewanne 1 Bodenöffnungen 14 vorgesehen sind, die im Wesentlichen als Ablauföffnungen für Schmutzwasser gedacht sind.

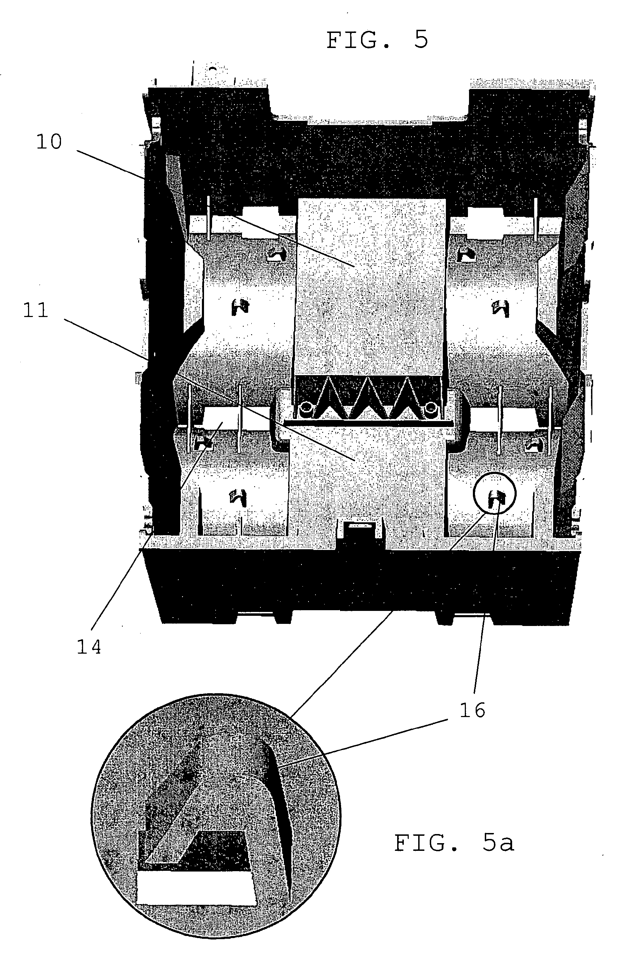

Die Figur 5 zeigt die Batteriewanne annähernd aus der gleichen Perspektive wie Figur 4 und unterscheidet sich von Figur 4 im Wesentlichen dadurch, dass eine bzw. mehrere weitere funktionelle Einrichtungen der Batteriewanne angeformt sind. So sind auf der Rückseite der Anlagenflächen 6 für die Behälter 13 Klemmen 16 vorgesehen, die der Batteriewanne 1 direkt angeformt sind und als Befestigungsklemmen 16 für Gurte bzw. Schellen zur Montage der Behälter 13 vorgesehen sind. Die Klemmen 16 ermöglichen eine einfache Montage des Behälters 13 und verhindern vor allem auch ein Herunterfallen des Gurtes bzw. der Schelle bei der Montage.

### Bezugszeichenliste

- 1: Batteriewanne
- 2: vordere Stirnwand
- 3: hintere Stirnwand
- 4: Seitenwand
- 5: Boden
- 6: Anlagefläche Behälter
- 7: Spoiler Behälter
- 8: Blechverstärkung
- 9: Verstärkungsririg
- 10: Auflagefläche Batterie
- 11: Auflagefläche Batterie
- 12: Verstärkung
- 13: Behälter
- 14: Bodenöffnung für Schmutzwasser
- 15: Anlagefläche Batterie
- 16: Klemme

## Patentansprüche

1. Kunststoffformteil zur Aufnahme mindestens einer Fahrzeugbatterie eines Kraftfahrzeuges mit Befestigungsstellen zur Fixierung des Kunststoffformteils am Kraftfahrzeug, wobei das Kunststoffformteil aus einem vorimprägnierten Faser-Matrix-Halbzeug hergestellt ist und mit mindestens einem Einlegeteil verstärkt ist,
**dadurch gekennzeichnet, dass**
das Kunststoffformteil mindestens eine weitere funktionelle Einrichtung aufweist, die dem Kunststoffformteil unmittelbar während des Formgebungsprozesses angeformt ist.

2. Kunststoffformteil nach Anspruch 1,
**dadurch gekennzeichnet, dass**
die weitere funktionelle Einrichtung der Kunststoffmatrix direkt angeformt ist.

3. Kunststoffformteil nach Anspruch 2,
**dadurch gekennzeichnet, dass**
die weitere funktionelle Einrichtung dem Formteil über ein Einlegeteil angeformt ist.

4. Kunststoffformteil nach einem der Ansprüche 1 bis 3,
**dadurch gekennzeichnet, dass**
die mindestens eine funktionelle Einrichtung Anlageflächen (6) und/oder Montagehilfen für Tankbehälter, Halterungen für Kabel, Befestigungsvorrichtungen für Deckel, Ventile, Verteiler oder Tanks, Klemmen (16), Bodenöffnungen (14) für Schmutzwasser, Antirutschvorrichtungen oder Positionierungshilfen und Anlageflächen (15) für Batterien umfasst.

5. Kunststoffformteil nach Anspruch 4,
**dadurch gekennzeichnet, dass**
die Befestigungsvorrichtungen in Form von Gewindeeinsätzen oder Blechverstärkungen (8) dem Kunststoffformteil direkt angeformt sind.

6. Kunststoffformteil nach Anspruch 4,
**dadurch gekennzeichnet, dass**
die Antirutschvorrichtungen, wie z.B. Antirutschmatten, mit dem Kunststoffmaterial des Kunststoffformteils umpresst oder umspritzt sind.

7. Kunststoffformteil nach einem der Ansprüche 1 bis 6,
**dadurch gekennzeichnet, dass**
das Kunststoffformteil in einem Formgebungsprozess für Kunststoffe ausgewählt aus der Gruppe Spritzgießen, Verpressen, Extrusion oder Strangablegeverfahren herstellbar ist.

8. Kunststoffformteil nach einem der Ansprüche 1 bis 7,
**dadurch gekennzeichnet, dass**
die Kunststoffkomponente für den Formgebungsprozess ein Kunststoffmaterial ausgewählt aus der Gruppe faserverstärktes Polypropylen (PP), faserverstärktes Polyethylen (PE), faserverstärktes Polyamid (PA) sowie "sheet moulding compounds" (SMC) und Glasfasermattenthermoplaste (GMT) auf der Basis von Polypropylen, Polyethylen oder Polyamid umfasst.

9. Kunststoffformteil nach einem der Ansprüche 1 bis 8,
**dadurch gekennzeichnet, dass**
die Fasern zur Faserverstärkung der Kunststoffmatrix Glasfasern, Karbonfasern, Metallfasern, Nylon und textile Naturfasern umfassen, wobei die Fasern unidirektional, gewoben oder wirr einsetzbar sind.

10. Kunststoffformteil nach einem der Ansprüche 1 bis 9,
**dadurch gekennzeichnet, dass**
als lokale Verstärkungen Gewebematten oder Glasfaserstränge allein oder in Kombination mit Blechverstärkungen (8) eingesetzt sind.

11. Kunststoffformteil nach einem der Ansprüche 1 bis 10
**dadurch gekennzeichnet, dass**
das mindestens eine Einlegeteil ein Metallblech ist.

12. Kunststoffformteil nach einem der Ansprüche 1 bis 11
**dadurch gekennzeichnet, dass**
das mindestens eine Einlegeteil ein Faserhalbzeug, eine Gewebelage oder eine Vlieslage ist.

13. Kunststoffformteil nach Anspruch 11 oder 12
**dadurch gekennzeichnet, dass**
das mindestens eine Einlegeteil der Grundform des Kunststoffformteils entspricht.
